# EUROPEAN PATENT SPECIFICATION

(11) **EP 4 176 973 B1**
(45) Date of publication and mention of the grant of the patent: **08.04.2026**
(21) Application number: 20940673.5
(22) Date of filing: 23.12.2020
(51) Int. Cl.: B05B 13/06, B05B 1/06, B05B 1/14, B05B 3/10, B05B 7/32, F16L 55/18

(54) **SPRAY HEAD**
SPRÜHKOPF
TÊTE DE PULVÉRISATION

(30) Priority: 16.06.2020 ES 202031282 U
(43) Date of publication of application: 10.05.2023
(73) Proprietor: FSO Internacional, S.L., 50720 Zaragoza (ES)
(72) Inventor: FERNÁNDEZ ARENAS, Juan, 50720 La Cartuja (Zaragoza) (ES); ÁLVAREZ MARTÍN- BALLESTERO, Manuel, 50720 La Cartuja (Zaragoza) (ES)
(74) Representative: Herrero & Asociados, S.L.
(86) International application number: PCT/ES2020/070818
(87) International publication number: WO 2021/255301

(56) References cited:
- CA-A1- 2 750 301
- CN-A- 105 750 107
- CN-A- 107 150 005
- DE-B4- 102009 012 512
- KR-A- 20160 078 982
- KR-Y1- 200 436 417
- US-A1- 2014 020 499
- US-A1- 2020 109 811

## Description

### Technical sector

The present invention falls within the technical field of manufacturing machinery for equipment and systems for the application of products by spraying, such as spraying paint and varnishes, more particularly, the present invention refers to a head, for the application of spraying of a product determined by a fluid, such as a fluid obtained by a mixture of fluids, preferably epoxy resin and a catalyst.

The fundamental object of the invention is the restoration of surfaces, carrying out a continuous dosing of a product obtained by a mixture of fluids, preferably epoxy resin and a catalyst, preferably applied inside pipes from diameter 63 mm (2"), through a spray head, all by means of a standard machine with electronic control of flow regulation, continuous and proportional dosing suitable for mixing fluids, as well as fluid recirculation means and cleaning of the installation in which it must be able to operate. The dosing head must spray homogeneously with 360° coverage to cover the inner wall of a pipe. Another objective is to provide the spray head with means to prevent it from getting stuck in the event of irregularities that the pipe may present, increasing the distance at which it can work with respect to known heads. Another objective that must be achieved is to improve the surface homogeneity in the coating of the interior walls of the pipes.

### Background of the invention

Utility model U201230084 refers to a network of devices for the restoration of pipes, in which a spray applicator is described, comprising an electric motor whose shaft is connected to a spray disk provided with a plurality of perforations, and which is coupled to a nozzle to which a pressurized fluid reaches to carry out its pulverization. This applicator has the disadvantage that the length of the pipe to be restored is very limited since its configuration cannot be guided along the pipe.

In addition, various product application systems for the restoration of pipes are known, for example, patent WO2013034792 describes a network of devices for the restoration of application pipes in large installations, such as general pipes in buildings, and also for small-sized installations, such as kitchen and bathroom pipes, where the resin is mixed with a catalyst that is projected through an applicator, with the drawback that the applicator does not allow it to be guided through the pipes , and the mixing is not carried out optimally.

Patent WO0164325 describes an electronic device for dispensing materials with up to three surface-applied components, in which the mixing is not carried out optimally either and the application is carried out by means of a spray gun that cannot be guided through the interior of either pipelines.

Another example can be found in patent US4523854 where an apparatus for mixing a solution used for lithographic printing presses is described, which includes a mixing tank, a suction pump and a distribution line leading to several presses.

Another solution is described in the invention patent P200201012, in which a dosing and mixing machine for liquid products in general is presented, consisting of different separate elements, but connected to each other, to carry out the application of mixed product through spray guns.

It is also registered with the Canadian patent CA 270301, from the applicant Weisenberg, Kent, US.The invention relates to a coating device which can be inserted through a pipe and sprays an electrically charged coating mixture through 360° onto the interior surface of the pipe. The coating mixture is electrostatically charged to facilitate complete encapsulation and adhesion to all pipe wall surfaces with a circumferentially uniform thickness. The device may further incorporate nitrogen to mix the coating material. The coating device may be contained in a multi-piece housing having flexible rod-like components supporting the device in the center of the longitudinal axis of the pipe.

Mostly the solutions incorporated to the state of the art are focused on carrying out an adequate dosage of fluids, not being their application elements, that is, guns or sprinklers designed for projection in closed spaces, the object of great changes oriented to the technical challenges that It supposes the projection inside a pipe and the transport of this element through the interior of it. The applicant is not aware of solutions such as the one recommended.

### Description of the invention

To achieve the objectives and solve the aforementioned problems, the invention relates to a spray head comprising a direct current (DC) electric motor whose shaft is connected to a spray disc that includes a plurality of perforations through which that spraying is carried out, for which said spray disc is in connection with a supply pipe to which the fluid to be sprayed is applied; which in the preferred embodiment is a mixture of epoxy resin/catalyst, which mixture, for example, can be carried out by means of a machine that also drives the fluid towards the applicator head, as described below.

The spray head presents the novelty that it is characterized by the fact that it also includes:
- a casing for the protection of the electric motor, which is equipped with centering elements made up of supports and/or brushes, sized according to the size of the pipe to be sprayed to allow the centering of the head on the pipe, and to facilitate its guidance along the interior of said pipe to be sprayed, preferably the casing is made of aluminum acting as a heat sink for the motor.
- a coupling connector to a supply line for the fluid to be sprayed.
- An electrical connector for the electrical connection of the motor, which, for example, can be connected to a connector of a control panel provided for said machine.
- Means to change the number of revolutions and direction of rotation of the DC motor.

In addition, the supply pipe for the head is flexible and includes a section covered by a spring, which holds flexible arcuate elements that are also fixed to the protection casing, in such a way that a flexible joint is established. These flexible elements make up a casing close to a cone or cup whose smaller diameter is part of the portion covered by the spring, gently increasing to its larger diameter close to the casing, this allows after introducing the spray head into the pipe to be cleaned and pulling the spray head this can better save the discontinuities that present the dintorno of the pipe or change its direction in an elbow, mouthing the set.

The configuration of the head described has the great advantage that it allows spraying inside a pipe up to a length of 60 or 70 meters, unlike the state of the art in which it is only possible to spray up to ten meters, as it does not have guide elements and a flexible joint that also helps to insert the assembly as described.

As has been pointed out, the invention refers to a spray head for the restoration of pipes with diameters greater than diameter 63 mm (2").

It is important to note that when a restoration is carried out on a pipe, the aim is to obtain the best possible surface finish to avoid that in its future use the fluids that pass through it find preferential points to create deposits on these imperfections. This finish depends on numerous factors, the type of resin and its application conditions, and more specifically in the invention recommended the pulverization disc whose holes are designed considering the rheology of the fluid, speed of application, etc. To prevent the projection of the fluid generate a pattern due to the centrifugal force with which it is projected, the invention has means to change the speed and direction of rotation of the spray disk by means of a DC controlled motor.

### Description of the figures

To better understand the purpose of this addition, a preferential practical embodiment of the same has been represented in the attached plan.
Figure 1- shows a perspective view of the spray head, in which the spray head (1), supply pipe (2), coupling connector (3), DC electric motor (4), elements of centering and support (5), brushes (6), spray disc (7), casing (8), flexible arched elements (9), spring (10), and electrical connector (11).
Figure 2- shows a front view of the resin and catalyst mixing and dosing machine (12), where 2' is the equipment supply pipe whose other end is connected to the spray head (1).

### Preferred embodiment of the invention

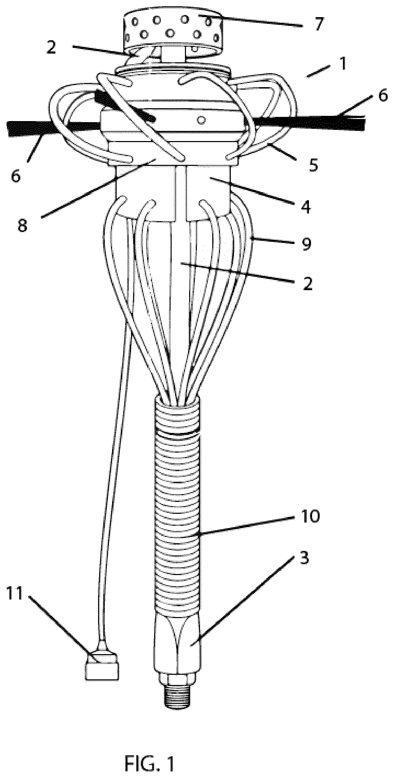

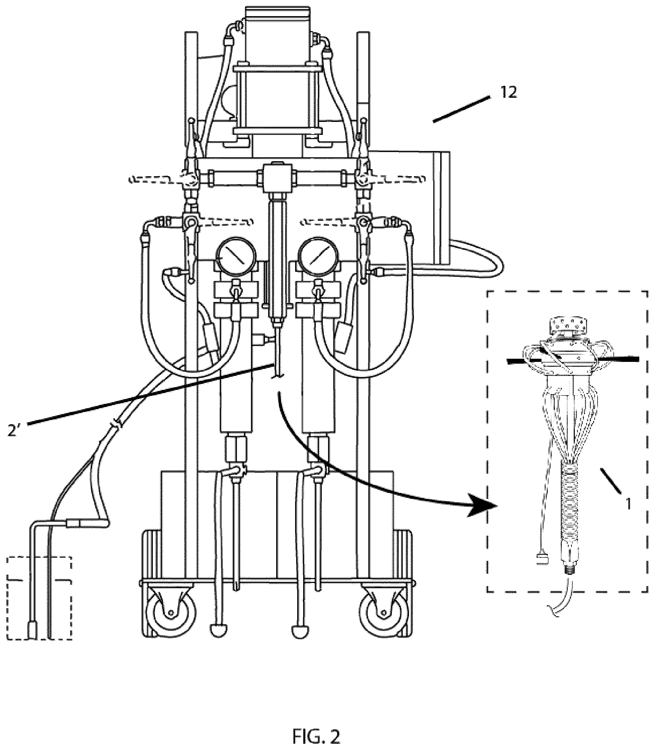

The constitution and characteristics of the invention, may be better understood with the following description made with reference to a preferred mode of execution, which without limiting character is shown in figures 1 and 2.

In figure 2 can be seen a standard dosing and mixing equipment (12) that allows in a precise way to provide a constant supply of the fluid to be sprayed, which in this preferred execution employs an epoxy resin and its catalyst through a supply pipe (2') communicated with the spraying head (1). The spraying head has the corresponding coupling connector (3) figure 1, from which a flexible supply pipe (2) starts to the interior of a spraying disc (2) which presents a plurality of perforations and which has its relative rotation allowed by being retained to the axis of an adjustable direct current motor (4), has means for centering on the pipe by means of a plurality of centering and support elements (5) in combination with brushes (6), both elements proportional to the diameter of the pipe on which they operate; The arrangement of these centering and support elements is close to the end where the spraying disc is located and below it, as can be seen in figure 2. The supply pipe (2) is provided with a section covered by a spring (10), which holds some flexible arched elements (9) that are also fixed to the casing (8), so that a flexible and elastic articulation of the head is established as it advances along the pipe, which allows it to adapt to the different curvatures of the pipe, the geometry of its envelope generates a shape close to a cone whose smaller diameter part of the section covered by the spring becomes larger towards the area fixed in the casing, this shape allows it to engage properly when the head is tractioned, saving with this the irregularities of the pipe environment or the change of direction of an elbow. The casing (8) protects the motor and is made of metallic material to act as a heat sink, preferably aluminum.

To avoid the patterns caused by the spraying of the resin derived from the centrifugal force of the spraying disc, it includes means to invert its direction of rotation, these means are possible because its direct current drive motor can invert the polarity of its power supply, it has an electrical connector (11) from which to connect to a power supply cable on the surface.

The described head has the great advantage that it allows spraying inside a pipe up to 60 or 70 meters, unlike the state of the art in which it is only possible to spray up to ten meters, since it does not have a flexible joint and guiding elements.

## Claims

1. Spray head **characterized in that** it comprises an adjustable DC electric motor (4) whose axis is connected to a spray disc (7) provided with a plurality of perforations and which is connected to a flexible supply pipe (2), a protection casing (8) and heat sink of the electric motor, which includes centering elements selected from among some supports (5), some brushes (6) and a combination thereof; a coupling connector (3) to a supply line (2'), and an electrical connector (11) for connecting the motor; The supply pipe (2) comprises a section covered by a spring (10), which holds flexible arched elements (9) that are also fixed to the protection casing, generating an envelope close to a cone or cup whose smaller diameter is of the portion covered by the spring, increasing smoothly to its largest diameter close to the casing and establishing a flexible articulation.

2. Spray head according to the first claim, **characterized in that** it has means to invert the direction of rotation of the spray disc (7) as its DC electric drive motor presents the possibility of inverting the polarity of its power supply.

## Patentansprüche

1. Sprühkopf, **dadurch gekennzeichnet, dass** er einen einstellbaren Gleichstrom-Elektromotor (4), dessen Achse mit einer Sprühscheibe (7) verbunden ist, die mit einer Mehrzahl von Durchbohrungen versehen ist und die mit einem flexiblen Zuführungsrohr (2) verbunden ist, ein Schutzgehäuse (8) sowie eine Wärmesenke des Elektromotors mit Zentrierelementen, die aus Halterungen (5), Bürsten (6) oder einer Kombination davon ausgewählt sind; einen Kopplungsverbinder (3) zur Verbindung mit einer Zuführungsleitung (2') sowie einen elektrischen Anschluss (11) zum Anschluss des Motors umfasst; wobei das Zuführungsrohr (2) einen von einer Feder (10) umgebenden Abschnitt umfasst, welche flexible bogenförmige Elemente (9) hält, die ebenfalls am Schutzgehäuse befestigt sind, wodurch eine annähernd kegel- oder kappenförmige Hülle gebildet wird, deren kleinerer Durchmesser dem von der Feder umgebenden Abschnitt entspricht und sich allmählich bis zu ihrem größten Durchmesser in der Nähe des Gehäuses vergrößert, wodurch eine flexible Gelenkverbindung gebildet wird.

2. Sprühkopf nach Anspruch 1, **dadurch gekennzeichnet, dass** er Mittel zum Umkehren der Drehrichtung der Sprühscheibe (7) aufweist, wobei der Gleichstrom-Elektroantriebsmotor desselben die Möglichkeit bietet, die Polarität seiner Stromversorgung umzukehren.

## Revendications

1. Tête de pulvérisation **caractérisée en ce qu'**elle comprend un moteur électrique à courant continu réglable (4) dont l'axe est relié à un disque de pulvérisation (7) pourvu de plusieurs perforations et qui est relié à un tuyau flexible d'alimentation (2), un boîtier de protection (8) et un dissipateur thermique du moteur électrique, qui comprend des éléments de centrage sélectionnés parmi des supports (5), des brosses (6) et une combinaison de ceux-ci ; une fiche de couplage (3) à une conduite d'alimentation (2'), et un connecteur électrique (11) pour connecter le moteur ; le tuyau d'alimentation (2) comprend une section recouverte par un ressort (10), qui maintient des éléments arqués flexibles (9) également fixés au boîtier de protection, formant une enveloppe en forme de cône ou de coupelle dont le plus petit diamètre correspond à la partie recouverte par le ressort, augmentant progressivement jusqu'à son plus grand diamètre près du boîtier et constituant une articulation flexible.

2. Tête de pulvérisation selon la première revendication, **caractérisée en ce qu'**elle comporte des moyens pour inverser le sens de rotation du disque de pulvérisation (7) lorsque son moteur d'entraînement électrique à courant continu présente la possibilité d'inverser la polarité de son alimentation en électricité.
